# EUROPEAN PATENT APPLICATION

(11) **EP 4 241 874 A1**
(43) Date of publication of application: **13.09.2023**
(21) Application number: 22166347.9
(22) Date of filing: 01.04.2022
(51) Int. Cl.: B01D 53/62, B01D 53/64, B01D 53/80, C04B 20/02, C04B 28/02

(54) **IMPROVEMENT OF REACTIVITY BY OXIDATION**

(30) Priority: 10.03.2022 EP 22161403
(71) Applicant: Heidelberg Materials AG, 69120 Heidelberg (DE)
(72) Inventor: Zajac, Maciej, 69120 Heidelberg (DE); Skocek, Jan, 69120 Heidelberg (DE); Pato, Nicolas, 69120 Heidelberg (DE)
(74) Representative: Zellentin & Partner mbB Patentanwälte

(57) **Abstract**

Method for improving the reactivity of carbonated recycled concrete paste comprising sulfur in an oxidation state lower than 6+ as supplementary cementitious material comprising the steps:
- providing a starting material comprising recycled concrete paste,
- carbonation of the starting material with carbon dioxide contained in exhaust gas containing from 2 to 15 Vol.-% oxygen and/or from 35 to 400 vppm sulfur dioxide to provide carbonated recycled concrete paste, and
- oxidation of the carbonated recycled concrete paste to provide the supplementary cementitious material,
and method for making composite cements.

## Description

The present invention relates to a method for improving the reactivity of carbonated recycled concrete paste as supplementary cementitious material as well as to a method for manufacturing composite cements with improved reactivity.

Cement industry is struggling with the high CO₂ emissions related to the production of the cement clinker. A major part of the CO₂ emissions related to the clinker production originates from the raw materials used, i.e. from limestone. As environmentally friendlier alternatives to limestone do not exist at large enough scale, reduction of the raw material emissions by limestone substitution cannot solve the problem.

The only large-scale CO₂ abatement measure is then the post-production carbon capture and storage (CCS) or utilization (CCU). Carbon capture technologies such as amine-based CO₂ scrubber, membrane-based gas separation, oxyfuel kiln lines or indirect calcination of the calcium carbonate are needed for the CCS to work efficiently. The storage of CO₂ has several social and technical constrains, still being the most promising short-term solution for the cement industry. Nonetheless, the pursuit of the alternative solutions is ongoing and particular focus is on CCU solutions. The CO₂ captured from the cement industry can be used for the food industry or during the oil recovery. However, the volume of the CO₂ gases currently used for both applications is significantly lower than the volume of the CO₂ emitted during the cement production. Consequently, alternative solutions are needed.

Enforced carbonation of recycled concrete paste (abbreviated RCP) is an alternative widely discussed. Carbonation of RCP is advantageous since it mineralizes CO₂ and provides a material useful as filler or even as supplementary cementitious material for composite cements. Since composite cements are also reducing CO₂ emissions by decreasing the clinker amount this is an especially effective way to save CO₂ emissions in cement manufacturing.

However, manufacturing a supplementary cementitious material or composite cement with reliable reactivity from RCP by carbonation with exhaust gas is challenging. Both RCP and exhaust gas have a very variable composition depending on many factors. Also, to achieve the object of significantly reducing CO₂ emissions the carbonation needs to be substantially complete for both the carbonation of the RCP and the use of CO₂ in carbonation. Numerous proposals have been made, see e.g. EP 3 498 681 A1, EP 3 581 257 A1, EP 3 656 750 A1, EP 3 744 700 A1, EP 3 750 619 A1, and EP 3 778 525 A1 and the references cited therein.

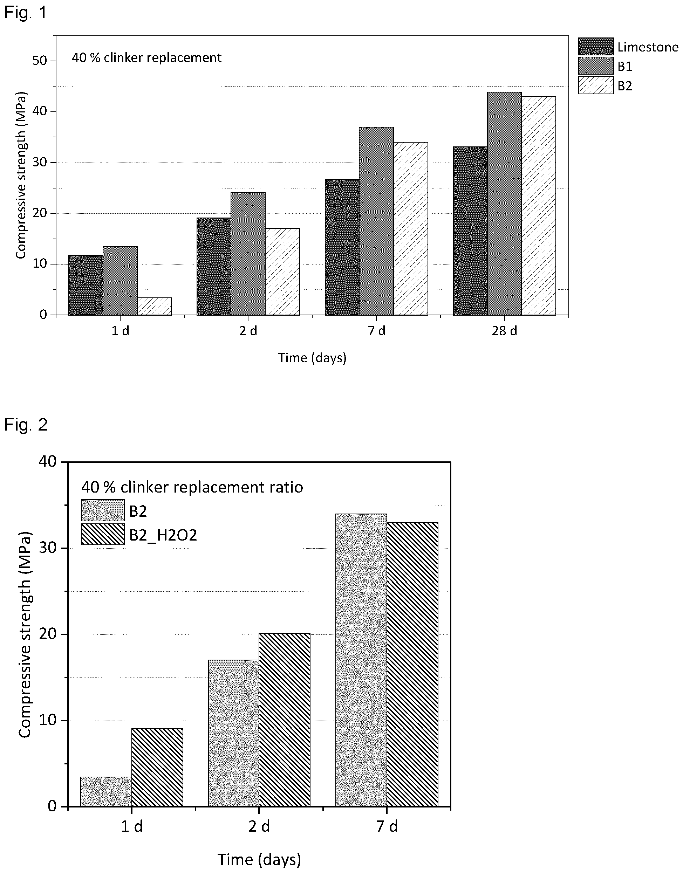

Trial carbonations on an industrial scale showed differing reactivity of the carbonated RCP. Figure 1 shows the measured compressive strength of composite cements containing 40 wt.-% clinker replacement by limestone and two samples of the same RCP carbonated on an industrial scale with exhaust gas from a rotary kiln, B1 and B2. Besides a similar carbonation degree the strength development in the first week and especially in the first two days was significantly lower for the second sample carbonated with exhaust gas, B2, compared to the first one, B1, as well as compared to limestone.

Surprisingly, it was found that a considerable amount of sulfur in an oxidation state below S⁶⁺ is present in the second sample. An oxidation of the carbonated RCP (abbreviated cRCP) improved reactivity to resemble that of the first cRCP sample carbonated with exhaust gas as shown in figure 2.

Thus, the object of providing cRCP as supplementary cementitious material with reliable, adequate reactivity is solved by a method for manufacturing a supplementary cementitious material comprising:
- providing a starting material comprising recycled concrete paste,
- carbonation of the starting material with carbon dioxide contained in exhaust gas to provide carbonated recycled concrete paste, wherein the exhaust gas contains from 2 to 15 Vol.-% O₂ and/or from 35 to 400 vppm SO₂, and
- oxidation of the carbonated recycled concrete paste to provide the supplementary cementitious material.

The object is also achieved by a method for manufacturing composite cements with improved reactivity comprising:
- providing a hydraulic cement,
- providing a carbonated recycled concrete paste by providing a starting material comprising recycled concrete paste and carbonating the starting material with carbon dioxide contained in exhaust gas, wherein the exhaust gas contains from 2 to 15 Vol.-% O₂ and/or from 35 to 400 vppm SO₂, to provide carbonated recycled concrete paste,
- mixing the carbonated recycled concrete paste with the hydraulic cement to provide the composite cement,
wherein the carbonated recycled concrete paste and/or the composite cement is oxidized.

According to the invention it is possible to make composite cements with significantly reduced CO₂ emission, including CO₂ neutral cements, while reactivity is reliably kept at a level comparable to pozzolans like fly ash. Both recycled concrete paste and exhaust gas are available everywhere and combining them to make new cement is a very desirable closed loop solution.

To simplify the description compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like a dicalcium silicate obtained by hydrothermal treatment. Composite cement or binder mixture means a mixture containing cement and a supplementary cementitious material. A cement, composite cement or binder is usually used adding water or another liquid and mostly also aggregate. Typically, admixtures and/or additives are added to the binder and/or the paste.

A supplementary cementitious material (abreviated SCM) is defined as a pozzolanic and/or latent hydraulic material useful to replace a part of the clinker in a composite cement or binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium hydroxide, calcium oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates and calcium silicate aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g. a pre-cast concrete element or a floor or a bridge part from cast in place concrete.

According to the present invention, the reactivity of carbonated recycled concrete paste as SCM comprising sulfur in lower oxidation states than S⁶⁺ is improved by oxidation. It was surprisingly found that SCM containing sulfur in lower oxidation states which was generated during carbonation show insufficient reactivity. Such lower oxidation state results from exhaust gas with too low oxygen and/or too high sulfur dioxide content. It was found that oxygen amounts from 2 to 15 Vol.-%, often from 4 to 12 Vol.-%, and even in the range from 7 to 10 Vol.-%, result in reduction of sulfur compounds to lower oxidation states than 6+ and/or fail to sufficiently oxidize such compounds to an oxidation state of 6+. Also, too high amounts of sulfur dioxide, i.e. from 35 to 400 vppm, often from 50 to 350 vppm, and even from 75 to 300 vppm, promote a formation or sulfur compounds with a sulfur oxidation state below 6+. According to the invention, an oxidation step remedies that. Thereby, non-sulfate sulfur like sulfites and sulfides contained in the cRCP is transformed into sulfate and the strength development during the first days, i.e. up to 7 days and especially up to 1 or 2 days, of composite cements made from it is significantly enhanced. The oxidation can occur with the SCM alone and/or with the composite cement, i.e. after mixing the SCM with the hydraulic cement.

The method according to the invention uses waste concrete obtained as known per se to provide the starting material comprising recycled concrete paste. Waste concrete covers all materials that occur in the use of cement, binder and hydraulically hardening building materials. One typical example is concrete demolition waste. Further examples are remains from hydraulically hardening building materials, like concrete and mortar prepared and then superfluous, and solid parts in the waste from cleaning devices for concreting, like concrete trucks, mortar mixers, and moulds for precast concrete parts. It is contemplated that other waste materials of similar composition as waste concrete, i.e. rich in carbonatable Ca and/or Mg phases, e.g. hydrates, fly ashes, slags and mixtures thereof, can be carbonated to provide highly reactive SCM in the same way as waste concrete or supplement it in the starting material. Rich in carbonatable Ca and/or Mg phases means that at least 12.5 wt.-% of the waste material calculated as oxides is CaO and/or MgO and at least 80 wt.-% of the CaO and MgO is in carbonatable phases before carbonation. Preferably, CaO and/or MgO constitute at least 10 wt.-%, more preferably at least 15 wt.-% and most preferred at least 20 wt.-% of the waste material. Preferably, at least 85 wt.-%, more preferably at least 90 wt.-% of the CaO and MgO are in carbonatable phases. Thus, while a part of the carbonatable CaO and MgO in the waste material might be already carbonated before carbonation, at least 10 wt.-% of the material calculated as oxides is carbonatable but not yet carbonated CaO and/or MgO.

One preferred waste concrete is concrete demolition waste. Concrete demolition waste designates the crushed material obtained during demolition of concrete containing structures like buildings and road surfaces from which the foreign materials like wood, metal parts, brick parts, and plastic, have been substantially completely removed. According to the invention, the fines resulting from concrete demolishing are useful as starting material because they contain high amounts of RCP. Recycled concrete fines (abbreviated RCF) designates the material obtained after crushing concrete demolition waste and separating the particles reusable as aggregate and, if applicable, any foreign matter contained. The exact composition and particle size distribution of the concrete fines depends on the original binder and composition used in the concrete and on the demolishing and grinding procedures applied. Usually, the original aggregate is separated as much as possible and the RCF contains mostly the ground RCP together with fine sand/aggregates, which are usually present in amounts of 30 to 80 wt.-% of the total material weight. Preferably, the starting material uses RCF with at least 30 wt.-% RCP, more preferred at least 40 wt.-% and most preferred at least 50 wt.-%.

Another preferred waste concrete is concrete residues arising during building, e.g. but not limited to unused ready mix concrete and left over mortar. The residues are crushed to separate hardened cement paste from aggregate, and the finer fraction - optionally ground - provides the starting material used according to the invention. Also cement that has been stored too long and partially hydrated is useful, if needed after crushing and/or grinding. Further, the waste arising during cleaning of devices used in concreting, e.g. molds for manufacturing pre-cast concrete elements, especially the filter cake from pre-cast plants, is suitable, if needed after crushing and/or grinding. With all these preferably at least 30 wt.-% RCP, more preferred at least 40 wt.-% and most preferred at least 50 wt.-% should be present in the material used to provide the starting material, wherein RCP includes the unreacted cement if such is present. With other words, as far as hydraulic phases like belite, alite, ferrite etc. are present in the waste concrete, their amount is taken into account for calculating the content of RCP.

The starting material can be provided from one waste concrete or by mixing and/or co-grinding several waste concrete materials as well as other materials rich in carbonatable Ca and/or Mg phases. Typically, it is easier to use only one source, but using two or more allows optimization of the composition and converting otherwise unsuitable materials, i.e. ones that could not be used on their own. In one embodiment the starting material consists of one waste concrete or of a mixture of two or more waste concretes.

It is advantageous when the starting material contains high amounts of carbonatable phases, specifically of hardened paste, e.g. at least 30 wt.-%, or at least 40 wt.-%, or at least 50 wt.-%, or at least 60 wt.-%, or at least 70 wt.-%, or at least 75 wt.-%.

The particle size of the starting material is not specifically critical, however, as finer materials are usually carbonated faster a D₉₀ of ≤ 300 µm, preferably ≤ 150 µm, most preferred ≤ 100 µm is typically desired. If the starting material has not the desired particle size distribution (abbreviated PSD), it can be easily adjusted with methods and devices known per se, like grinding, sieving, or classifying or any combination of them. Particle size distribution is measured by sieving for sizes above 2 mm herein and determined by laser granulometry for sizes below 1 mm. In the 1 - 2 mm range the method is chosen depending on the particle size range of the material. For ranges extending mainly above 1 mm sieving is commonly applied, for ranges extending mainly below 1 mm laser granulometry is typically better.

It is possible to include additional material into the carbonation step that accelerates the carbonation process and/or improves the final properties of the SCM or the building material made with it. This also applies to the embodiment where the starting material consists of one or more waste concrete(s).

Typically, additional material will be included in an amount from 0.001 to 1 wt.-% with respect to the total amount of starting material. Usually, substances that improve the properties of the composite cement or hydraulic building material are added to the cement or building material, but some can also accelerate the carbonation. In the latter case their addition to the starting material is advantageous. Preferably, substances for enhancing the carbonating process or mixtures of two or more thereof are used as additional material.

Suitable materials include substances that improve dissolution of CO₂ in the solution like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof; halogenides; ethylenediaminetetraacetic acid (EDTA) or others. Additionally, enzymes such as carbonic anhydrase can be used to enhance carbonation efficiency and modify the properties of the reaction products. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar substances.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinylsulfonic acids, styrene sulfonate, citric acid and other organic acids, polysaccharides and phosphonates, polycarboxylates.

Furthermore, it is possible to add admixtures that modify properties of the hydraulic building material or the building structure made from the composite cement comprising the SCM according to the invention already to the starting material (usually those will be added to the composite cement or building material).

Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g. surface active substances, especially ones based on soaps from natural resins or synthetic nonionic and ionic surfactants.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides).

It is also possible to add admixtures that are designed to modify the rheology properties, i.e. rheology modifiers like polycarboxylates, lignosulfonates, starch, Karoo gum, bentonite clay, polyvinyl alcohol, and mixtures thereof.

All admixtures are used in the amounts known as such, wherein the amount is adapted to a specific binder and special needs in the known manner.

Additives can be added as well to the carbonation step, but usually those are added to the composite cement or the hydraulic building material. Usual and useful additives are e.g. fillers (especially limestone and other stone dusts), pigments, reinforcing elements, self-healing agents etc. All these can be added in the amounts known per se.

Not prior published EP 21176008.7 proposes a combination of hydrothermal treatment and carbonation to enhance and accelerate the carbonation of recycled concrete paste increasing its CO₂ uptake and activating also parts of the contained aggregates to become reactive as SCM in the case of silicate and/or alumino-silicate containing aggregate. Thus, in one preferred embodiment, the starting material comprising RCP and aggregate containing silicates and/or alumino-silicates is hydrothermally treated as described in EP 21176008.7.

Specifically, the starting material is hydrothermally treated, i.e. heated in the presence of water. The water-solid weight ratio in the aqueous mixture is equal to or larger than 0.1. Preferably, the water-solid ratio is in the range from 0.25 to 4 and more preferred from 0.3 to 2.0. The amount of water is adjusted such that a full hydration of the solids can be achieved. The temperature during the hydrothermal treatment is usually set in the range from 25 to 400 °C, preferably in the range from 75 to 350 °C. According to a particularly preferred embodiment the temperature is in the range from 75 or 100 to 300 °C or 250 °C. The pressure during the hydrothermal treatment is preferably endogenous, i.e. the pressure that sets itself during the treatment at the selected temperature. It can also be kept constant. Typically the pressure is in the range from 1 to 25 bar, preferably from 2 to 20 bar. All pressures indicated herein are absolute pressures. It is possible to carry out the hydrothermal treatment under stirring and/or grinding to prevent settling of the solids and/or to provide fresh, non-reacted surface area. The treatment can last from minutes to hours depending on the specific starting materials, the pressure, the temperature and additional material if such is added. Typically the treatment time may vary from 30 minutes to 48 hours. According to a particular embodiment, it is in the range from 2 to 36 hours.

The starting material is subjected to carbonation with carbon dioxide contained in exhaust gas. Preferably, the exhaust gas is from cement or lime plants, coal or gas fired power plants, and/or waste incinerators. The exhaust gases are applied directly according to the invention, i.e. with no cleaning and CO₂ concentrating steps. Mixtures of exhaust gases from different sources can be used. But a transportation of the exhaust gas over long distances is not preferred, i.e. it should be possible to pass the exhaust gas into the carbonation via pipes and/or tubing. Capturing in tanks as well as storage and transportation of such tanks causes additional effort and possibly carbon dioxide emission. Therefore, integrating the carbonation step with the exhaust gas producing process - even if a pipeline of some length is needed - or with other words, direct use of the exhaust gas, is applied according to the invention.

Suitable devices and conditions are known as such and have been described in the prior art. Especially useful are for example, but not limited to, the processes and devices described in EP 3 724 147 A1, EP 3 656 750 A1, EP 3 744 700 A1, EP 3 750 619 A1, EP 3 778 525 A1, EP 3 808 713 A1, not prior published EP21185792.5, EP21163464.7, and EP 21188485.3, all of which are incorporated herein by reference in their entirety.

Semi-dry carbonation processes based on RCP fluidization and/or reactive grinding are preferred as carbonation step. Alternatively, a wet process such as in a bubbling reactor, a wet scrubber, a gas cleaning or conditioning tower or reactor, a gas cooler etc. can be also used.

In a preferred embodiment a so called semi-dry carbonation is applied. Therein, carbonation typically takes place at ambient pressure, with a temperature ranging from 21 to 99 °C, a CO₂ concentration in the introduced gas from 1 to 99 Vol.-% and a RH from 50 and 100 %. The concentration of CO₂ during carbonation should preferably range from 2 Vol.-% to 98 Vol.-%, most preferred from 3 Vol.-% to 97 Vol.-%. The temperature during carbonation usually ranges from ambient, e.g. 15 °C to 30 °C or 50 °C or 80 °C or 99 °C. The relative humidity during carbonation ranges preferably from 60 % to 100 %, most preferred from 80 % to 100 %. The pressure may be increased depending on the needs. For example, an overpressure up to 100 bar, preferably up to 10 bar, can be used.

The described carbonation methods are carried out in devices known as such. Typically, carbonation times from a few minutes, like 1, 2, 5, or 10 minutes, to several hours, like 1, 2, 5, 10 or 20 hours, are suitable. Any other method for carbonation is likewise suitable. Typically, useful CO₂ concentrations range from 2 to 98 Vol.-%, preferably from 5 to 40 Vol.-% are used, best from 10 to 25 Vol.-%. Generally, a suitable temperature ranges from 40 to 250 °C, preferably from 50 to 200 °C, most preferred from 65 to 150 °C, or up to 100 °C for carbonation in aqueous solution.

The obtained carbonated product contains calcium carbonate, silica gel, and alumina-silica gel, possibly starting material left uncarbonated due to the chosen conditions as well as those components from the starting material that cannot be converted by carbonation. A carbonation degree of at least 50 %, preferably at least 75 % is usually aimed at, since a high carbonation degree optimizes both carbon dioxide sequestration and reactivity of the SCM. Carbonation degree is defined herein as the ratio of the calcium and magnesium in carbonates formed during carbonation to the carbonatable calcium and magnesium in the starting material.

The carbonated product can optionally be de-agglomerated and/or dried before the oxidation and also after the oxidation. De-agglomeration is beneficial as it provides finer material for the oxidation, allowing shorter times. Additionally, the SCM should have a fine PSD, so when deagglomeration is applied it is preferably applied before oxidation. Drying typically occurs at a temperature from 75 to 115 °C, preferably from 100 to 105 °C.

In a preferred embodiment the carbonated product is heat treated to increase its reactivity as described in not prior published EP21198297.0 before or after the oxidation, preferably before the oxidation. Accordingly, the cRCP is heat treated at a temperature from 120 to 350 °C, preferably from 150 to 300 °C, most preferred from 180 to 250 °C. Heat treatment is carried out until constant mass, i.e. until the mass change is less than 5 wt.-% and preferably less than 1 wt.-% upon further heating or for a given time between 1 minute and 10 hours and preferably between 10 minutes and 5 hours. Such a post carbonation heat treatment not only removes the water (the change of mass is in the range of -0.5 to -2 % of the total sample mass) but also activates the carbonated product which increases the compressive strength of hydrated composite cement samples by 5 % to 10 %, when compared to the carbonated product without heat treatment.

Finally, the carbonated recycled concrete paste is subjected to an oxidation step. For this, the cRCP can be transferred into a separate device or an oxidizing agent is added to the cRCP in the device used for carbonation. Further, an oxidizing agent can also be added to the starting material and/or during carbonation to combine oxidation and carbonation. It is also possible to combine heat treatment and oxidation in one step.

Useful oxidizing agents are for example, but not limited to, hydrogen peroxide, air, oxygen enriched air, gas mixtures containing oxygen, oxygen, ozone, nitric acid (HNO₃), nitrate compounds, and mixtures thereof. Especially preferred are hydrogen peroxide, air, oxygen enriched air, gas mixtures containing oxygen, and oxygen. The oxidation can be wet, semi-dry and dry, conditions including the temperature and time are chosen to optimize the oxidation reactions. Therein pressure or concentration of the oxidizing agent, temperature, and time are adjusted to provide oxidation of at least 50 wt.-%, preferably at least 60 wt.-%, most preferred at least 70 wt.-%, of the sulfur compounds with a sulfur oxidation state below 6+ to sulfate.

In semi-dry processes, oxidizing agents can be introduced into the carbonation step in the form of gases or liquids by e.g. spraying or drop-wise. For wet processes, the agents can be added to the solution or bubbled through the reactor if gaseous. The oxidation agents can be alternatively introduced in a separate step by mixing-in liquid or solid agents or by bringing gaseous agents into contact with the carbonated RCP, e.g. by using counter-flow reactor, fluidized bed, flash reactor, rotating drums, dryers, mills.

Further, the composite cement can be treated with the different oxidizing agents after mixing with hydraulic cement to provide a composite cement, i.e. oxidation of the cRCP occurs inside the composite cement. The agents described above are useful and preferably added to the grinding and/or blending process in solid or gaseous form. Liquids are also possible provided the amount of water is limited, i.e. amounts that do not cause a hydration of clinker phases after the oxidizing step of more than 10 %, preferably not more than 5 % and most preferred not more than 1 %.

Oxidation assures appreciable evolution of the compressive strength. It is contemplated that other supplementary cementitious materials containing sulfur in a lower oxidation state than sulfate will benefit from oxidation in the same way as cRCP. Thus, the reactivity of materials like slags, fly ashes, calcined clays, etc. in composite cements can be enhanced by oxidation as well.

The method according to the invention allows the transformation of hydrated cement paste into mainly calcite (other forms of calcium carbonate are possible) and reactive amorphous silica and silica-alumina gels. Also, small aggregate can be transformed when it contains silicate and/or alumino-silicate and the feed material is autoclaved. By oxidizing all sulfur to sulfate the found retarding effect of sulfur in lower oxidation states can be eliminated and reliable, adequate reactivity of the SCM and composite cement containing it is ensured.

Thus, a supplementary cementitious material obtained from waste concrete carbonation by the method according to the invention differs from one obtained according to the prior art when the waste material contains sulfur in lower oxidation staes than 6+ and/or such is produced during carbonation due to reducing properties. In those circumstances using SCM obtained according to the invention to make composite cements provides composite cements with higher reactivity. Therefore, a method for manufacturing a composite cement comprising the SCM blended with a hydraulic cement is a further embodiment of the invention.

The supplementary cementitious material obtained according to the invention can be ground to adjust the particle size distribution. The obtained supplementary cementitious material preferably has a particle size distribution with a D₉₀ from 10 µm to 500 µm, more preferably from 10 µm to 200 µm, especially from 25 µm to 90 µm.

The hydraulic cement is preferably selected from Portland cement, Portland composite cement, calcium sulfoaluminate cement, calcium aluminate cement and dicalcium silicate cement. Preferred hydraulic cements are Portland cements according to DIN EN 197-1, calcium sulfoaluminate cement and calcium aluminate cement. Especially preferred are Portland cements according to DIN EN 197-1.

Typically, the composite cement obtained from blending an SCM obtained according to the invention with a hydraulic cement comprises from 5 to 95 wt.-% cement and from 95 to 5 wt.-% SCM. Preferably, it contains from 30 to 90 wt.-% cement and from 70 to 10 wt.-% SCM, more preferred from 50 to 80 wt.-% cement and from 50 to 20 wt.-% SCM. In addition, usual admixtures and/or additives as described above for adding to the starting material can be added to the composite cement. The composite cement can also comprise one or more other SCM, i.e. the composite cement can be a ternary, quaternary, or even more components blend. Suitable other SCM are e.g. but not limited to fly ash, ground granulated blast furnace slag, and calcined clay. Naturally, the amounts of all components in a specific composite cement add up to 100 %, so if SCM and hydraulic cement are the sole components their amounts add up to 100 %, when there are other components, the amount of SCM and hydraulic cement is less than 100 %.

For use, the composite cement is transformed into a hydraulic building material, e.g. into mortar or concrete, by mixing with water. Typically, a water to binder weight ratio (w/b) from 0.1 to 1, preferably from 0.15 to 0.75, and more preferred from 0.35 to 0.65 is used. The SCM according to the invention and - if applicable one or more other SCMs that are optionally added - are included into the amount of binder for calculating the w/b ratio. The mortar or concrete usually also contains aggregates as well as optionally admixtures and/or additives. Admixtures and additives have been described before.

The composite cement is useful for all applications where ordinary Portland cement and known composite cements are used, especially concrete, mortar, and construction chemical products such as screed, tile adhesive etc.

Usually, aggregate and admixtures are added when making a hydraulically hardening building material like concrete or mortar from the composite cement according to the invention. The known aggregate and usual admixtures are used in the usual amounts. For construction chemical products like floor screed or tile adhesive any necessary aggregate and admixture is typically added to the composite cement to form a dry mix, as far as possible. The aggregate and admixture are chosen depending on use in a manner well known per se.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1

Filter cake from a pre-cast concrete elements plant was obtained as RCP. This material arises after filtration of the process and cleaning water in the precast facility, and is characterized by a high concentration of hydrated cement paste, mainly CEM III/A. The hydration time is limited to 2 - 6 weeks. The composition of the used RCP is shown in table 1.

**Table 1**

| Chemical composition (wt.-%) | |
|---|---|
| LOI (950 °C) | 22.44 |
| SiO₂ | 39.18 |
| Al₂O₃ | 6.88 |
| Fe₂O₃ | 1.76 |
| CaO | 43.51 |
| SO₃ | 3.04 |
| MgO | 3.90 |
| K₂O | 0.41 |
| Na₂O | 0.19 |

For the tests, 50 tons of this RCP were collected, crushed and ground in an impact pin mill to a d₅₀ around 200 µm with 1 - 2 wt.-% residue above 1 mm. For carbonation on an industrial scale the RCP was used instead of slaked lime as scrubbing media in the gas suspension absorber (abbreviated GSA) of a cement plant. This GSA is normally used in conventional clinker production operation to scrub SO₂ from the off-gases of one of the two preheater strings. The semi-dry scrubber system was composed of the reactor itself, two cyclones with two recirculation boxes and a spraying nozzle system. The reactor was 3.65 m diameter and 14.2 m tall, featuring a gas retention time of ~ 2.2 s. It was composed of an inlet bend, a venturi with a velocity of 35 m/s and a riser section with a velocity of 6.4 m/s. Further, the fabric filter was used to collect the fine particulate leaving the cyclones. The RCP was placed into the recirculation boxes and the system was modified to allow the recirculation of the particulate captured in the bag filter to the riser section in order to maintain a constant hold-up in the system.

The industrial scale carbonated samples were found to having taken up the theoretically possible amount of carbon dioxide. Their behavior in composite cements was then tested with strength measurements according to standard EN 196-1 and compared to that of limestone. The results are presented in figure 1. It is immediately clear that the second industrial scale sample B2 showed considerably lower early strength than the LaB sample and sample B1. As mentioned previously, a high amount of sulfur with an oxidation state below 6+ was found in sample B2, different oxidation levels, including SO₄²⁻, SO₃²⁻ and S²⁻, were found.

Then, the sample B2 was oxidized according to the method of the present invention. For this, it was treated with 3 % H₂O₂ (w/b = 5) solution at a solution to solid ratio of 5 in a baker for 24 hours with continuous stirring. The sample was then filtered and the solid dried at 105 °C. After drying, the sample was deagglomerated in a laboratory ball mill.

After that compressive strength measurement was repeated. As shown in figure 2, the oxidation treatment according to the invention resulted in a significant improvement of the early compressive strength. The oxidized sample B2, designated B2_H2O2, has better strenght after 1 day and 2 days compared to the sample B2. Thus, although with the applied conditions the strength of sample B1 was not reached, a significant and valuable improvement of SCM reactivity was obtained with the method according to the invention, especially in the critical time up to the second day. The reactivity achieved suffices for composite cements and allows to provide a consistently reactive SCM besides the varying composition of the exhaust gas used for carbonation. It is contemplated that other SCM containing relevant amounts of sulfur with an oxidation state below 6+ like SO₃²⁻and S²⁻ will benefit in the same way from an oxidation treatment as described herein for manufacturing SCM from RCP.

## Claims

1. Method for improving the reactivity of carbonated recycled concrete paste comprising sulfur in an oxidation state lower than 6+ as supplementary cementitious material comprising the steps:
- providing a starting material comprising recycled concrete paste,
- carbonation of the starting material with carbon dioxide contained in exhaust gas containing from 2 to 15 Vol.-% oxygen and/or from 35 to 400 vppm sulfur dioxide to provide carbonated recycled concrete paste, and
- oxidation of the carbonated recycled concrete paste to provide the supplementary cementitious material.

2. Method according to claim 1, wherein oxidation takes place under wet, semi-dry or dry conditions by contacting the carbonated recycled concrete paste with an oxidizing agent preferably selected from hydrogen peroxide, air, oxygen enriched air, gas mixtures containing oxygen, oxygen, ozone, nitric acid (HNO₃), nitrate compounds, and mixtures thereof.

3. Method according to claim 2, wherein a pressure or a concentration of the oxidizing agent, a temperature, and an oxidation time are adjusted to provide oxidation of at least 50 wt.-%, preferably at least 60 wt.-%, most preferred at least 70 wt.-%, of the sulfur compounds with a sulfur oxidation state below 6+ to sulfate.

4. Method according to one of claims 1 to 3, wherein concrete demolition waste, concrete residues arising during building, cement partially hardened during too long storage, waste arising during cleaning of devices used in concreting, or mixtures of two or more thereof are used as the starting material.

5. Method according to one of claims 1 to 4, wherein the starting material includes additional material that accelerates the carbonation process and/or improves the final properties of the carbonated recycled concrete paste or the composite cement made with it or a building material made with the composite cement.

6. Method according to one of claims 1 to 5, wherein the exhaust gas is from cement plants, lime plants, coal fired power plants, gas fired power plants, waste incinerators, or is a mixture of such exhaust gases.

7. Method according to one of claims 1 to 6, wherein the exhaust gas contains from 4 to 12 Vol.-% or from to 10 Vol.-% oxygen and/or wherein the exhaust gas contains from 50 to 350 vppm or from 75 to 300 vppm sulfur dioxide.

8. Method according to one of claims 1 to 7, wherein the starting material is hydrothermally treated prior to carbonation, preferably in a temperature range from 25 to 400 °C and/or at a water solid-ratio from 0.2 to 4 and/or for 30 minutes to 48 hours and/or at an absolute pressure in the range from 1 to 25 bars.

9. Method according to one of claims 1 to 8, wherein the carbonated recycled concrete paste is heat treated before or after oxidation at a temperature from 120 to 350 °C, preferably from 150 to 300 °C, most preferred from 180 to 250 °C, between 1 minute and 10 hours, preferably between 10 minutes and 5 hours, or until the mass change upon further heating is less than 5 wt.-%, preferably less than 1 wt.-%.

10. Method according to one of claims 1 to 8, wherein the supplementary cementitious material has or is gorund to have a particle size distribution with a D₉₀ from 10 µm to 500 µm, preferably from 10 µm to 200 µm, espcially from 25 µm to 90 µm.

11. Method for manufacturing composite cements with improved reactivity comprising the steps:
- providing a hydraulic cement,
- providing a carbonated recycled concrete paste by providing a starting material comprising recycled concrete paste and carbonating the starting material with carbon dioxide contained in exhaust gas containing from 2 to 15 Vol.-% oxygen and/or from 35 to 400 vppm sulfur dioxide to provide carbonated recycled concrete paste,
- mixing the carbonated recycled concrete paste with the hydraulic cement to provide the composite cement,
wherein the carbonated recycled concrete paste and/or the composite cement is oxidized.

12. Method according to claim 11, wherein the hydraulic cement is selected from Portland cement, Portland composite cement, calcium sulfoaluminate cement, calcium aluminate cement and dicalcium silicate cement, preferably from Portland cements according to DIN-EN 197-1, calcium sulfoaluminate cement and calcium aluminate cement, especially preferred from Portland cements according to DIN EN 197-1.

13. Method according to claim 11 or 12, wherein the composite cement comprises from 5 to 95 wt.-% hydraulic cement and from 95 to 5 wt.-% supplementary cementitious material, preferably from 30 to 90 wt.-% hydraulic cement and from 70 to 10 wt.-% supplementary cementitious material, most preferred from 50 to 80 wt.-% cement and from 50 to 20 wt.-% supplementary cementitious material.

14. Method according to one of claims 11 to 13, wherein one or more of further supplementary cementitious materials, admixtures, and additives is added to the composite cement.
